Europäisches Patentamt

(19) European Patent Office

Office européen des brevets

(11) Publication number: **0 347 361**
**A2**

## (12) EUROPEAN PATENT APPLICATION

(21) Application number: **89500057.8**

(22) Date of filing: **12.05.89**

(51) Int. Cl.⁴: **B 62 B 7/08**

(30) Priority: **15.06.88 ES 8802268**
**18.07.88 ES 8802580**
**26.10.88 ES 8803261**

(43) Date of publication of application:
**20.12.89 Bulletin 89/51**

(84) Designated Contracting States:
**AT BE CH DE FR GB GR IT LI LU NL SE**

(71) Applicant: **Jané S.A.**
**Cartagena 203**
**E-08013 Barcelona (ES)**

(72) Inventor: **Jane Cabagnero, Ramón**
**c/o Jané, S.A. Cartagena 203**
**E-08013 Barcelona (ES)**

(74) Representative: **Pastells Teixido, Manuel**
**c/o PASTELLS TEIXIDO, S.L. Pau Claris 138, 5-1a**
**E-08009 Barcelona (ES)**

(54) **Seat for children's pushchairs.**

(57) With this invention there are improved the seats formed by pivotably connected board-like members coupled to a frame which rocks about an intermediate portion thereof, so as to obtain in the lying down position of the frame the horizontal arrangement of the backrest-seat assembly (1, 2) in a lower plane to the frame (6), to which end the seat (2) is suspended pivotably from the side members of the frame by way of connecting bars (21) and the backrest (1) bears pivotably on a rear support (23) pivotably connected in turn to points (25) on the side members of the chassis. The backrest (1) divided at (19) and transversely pivotably connected at (20) to the top end thereof, is attached pivotably at (7') to the rear portion of the frame, and between the seat (2) and the front portion (6') of the frame there is a space (E) for the legs of the child which rest on the corresponding area (3') of a removable upholstery member (31) covering the seatframe assembly.

Fig. 3

EP 0 347 361 A2

## Description

## Seat for children's pushchairs

The invention relates to a seat for children's push chairs directed mainly to improving the seats which are coupled to a rocking frame intermediate the latter and which are formed by a backrest, seat and, optionally, a footrest assembly mutually pivotably connected by their juxtaposed side edges, the mutual angular position of which changes to pass from a seat position as such to a lying down position.

Although the known seats effectively fulfil their mission, they suffer from the drawback that, in the lying down position of the frame, since the backrest is practically at the same level as the corresponding frame end, there is the risk of the child sliding backwards, above all when the pushchair is tilted, for example when going up a step or over an obstacle, it even being possible for the child to fall from the pushchair and suffer harm.

To avoid this problem, the backrest has been provided with a structure which may pass from a flat position when the seat is being used as such to an angular position in which the backrest is practically horizontal in a position below the frame to provide more protection for the child.

This is achieved by providing the upper portion of the backrest with a transverse division with the two parts being pivotably connected together in such a way that when the seat as such rises, the backrest is longitudinally compressed, forcing it to fold, with the end portion being suspended from the frame and supporting the remaining portion of the backrest below the level of said frame, while remaining pivotably connected to the seat.

This backrest pivotably divided to form an entrant angle at the head end of the seat may be applied to all kinds of seats for coupling to a rocking frame.

It is also an object of the invention to improve the said seat by achieving complete horizontality of both the backrest and the seat, which become coplanar in the lying down position of the assembly; at the same time as to form the assembly simply, while improving at the same time the assembly support means determining the change of position from seated to lying down.

To this end the seat is simply hung at the front end thereof from the side members of the frame by connecting bars pivotably connected to the latter, while the backrest bears, also pivotably, on a rear support, pivotably connected in turn to points on the side members of the pushchair chassis.

The backrest is attached pivotably at the top end thereof to the rear portion of the frame and the space remaining between the seat and the front portion of the frame is for receiving the child's legs, which rest on the corresponding area of a removable upholstered member which covers the seat and frame assembly.

In view of the particular structure of the pivoted assembly and the need to mount the frame pivotably in side support members of the pushchair chassis, the frame is provided with a special constitution forming in the side members thereof intermediate the ends a sharply downwardly sloping portion meaning that in that area it approaches to the bottom formed by the seat and the backrest whereby, mainly in the horizontal position of the frame, the child is not sufficiently protected in said side areas.

To overcome this problem, according to the invention, respective vertical board-like members have been attached to each of the two side members of the frame, which board-like members occupy the said side areas such that the upper edge thereof forms in the upper edge of the sheath which is placed over the frame and the seat, a linear uniformity maintaining an adequate distance from the bottom formed by the seat and the backrest thereof.

A further feature of these improvements lies in that respective brackets are attached to said lateral board-like members for the removable attachment of the ends of a U-shaped crossrail, the ends of which are provided with respective detachable fixing members mating with the said brackets.

To facilitate the explanation the description is accompanied by four sheets of drawings in which several embodiments have been shown as non-limiting examples of the scope of the present invention.

In the drawings:

Figure 1 is a schematic elevation view, partly in section, of the seat of the invention in the normal seat arrangement.

Figure 2 is also a schematic elevation view, partly in section, of the seat in the lying down position.

Figure 3 is a side elevation view, partly in section, of the seat assembly of the invention in its normal raised position.

Figure 4 is a rear elevation view of the assembly.

Figure 5 is a side elevation view, partly in section, of the seat in the lying down position thereof.

Figure 6 is also a side elevation view, partly in section, of the of the folded pushchair assembly.

Figure 7 is a perspective view of the seat coupled in the pushchair rocking frame, with the crossrail removed, and

Figure 8 is a side elevation view of the frame-seat assembly in the horizontal position thereof.

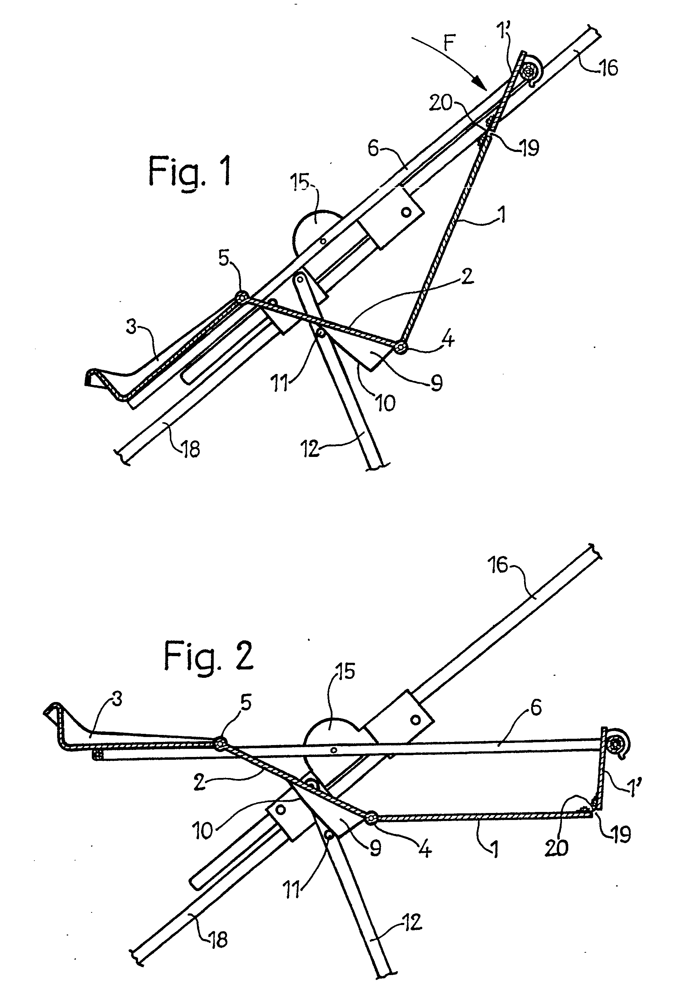

The seat shown in figures 1 and 2 comprises a backrest 1, the seat as such 2 and a footrest 3, which are pivotably attached together with transverse hinges 4 and 5 and are removably attached to the rocking frame 6 of the pushchair.

The board-like member of the seat 2 is provided on the lower surface thereof close to the side edges with respective projections 9 having a sloping edge 10 bearing against respective pins 11 provided in the side members of the pushchair chassis, for example, on the rear legs 12.

It is a feature of the present invention that the backrest is provided at the upper portion thereof with a transverse division 19 forming two pivotably connected parts, a lower one 1 forming the backrest as such and an upper portion 1' forming a headrest member, said two parts being connected together with any type of hinge 20.

With this structure, if the rocking frame 6 is pushed in the direction of the arrow F from the seat position of figure 1 towards the horizontal position shown in figure 2, the lower projections 9 of the seat slide forwards against the pins 11 of the legs, whereby the seat 2 is raised towards the frame, which causes a longitudinal compression of the backrest forcing it to fold at the divided portion 19 and take up an angled position with the headrest member 1' suspended from the frame 6 and supporting the rest of the backrest 1 in a lower position than the frame.

Thereby a comfortable lying down position is attained for the baby when sleeping, without any risk of the baby sliding towards the rear whenever the front end of the pushchair is raised.

In the embodiment shown, the frame 6 is coupled to the side supports 15 mounted on the arms of the handlebar 16 of the pushchair. Reference 18 shows the front leg of the pushchair.

It will be understood that this solution of a pivoted backrest forming a headrest member may be applied to seats having different features from those illustrated and which are coupled to children's pushchairs having a rocking frame like 6.

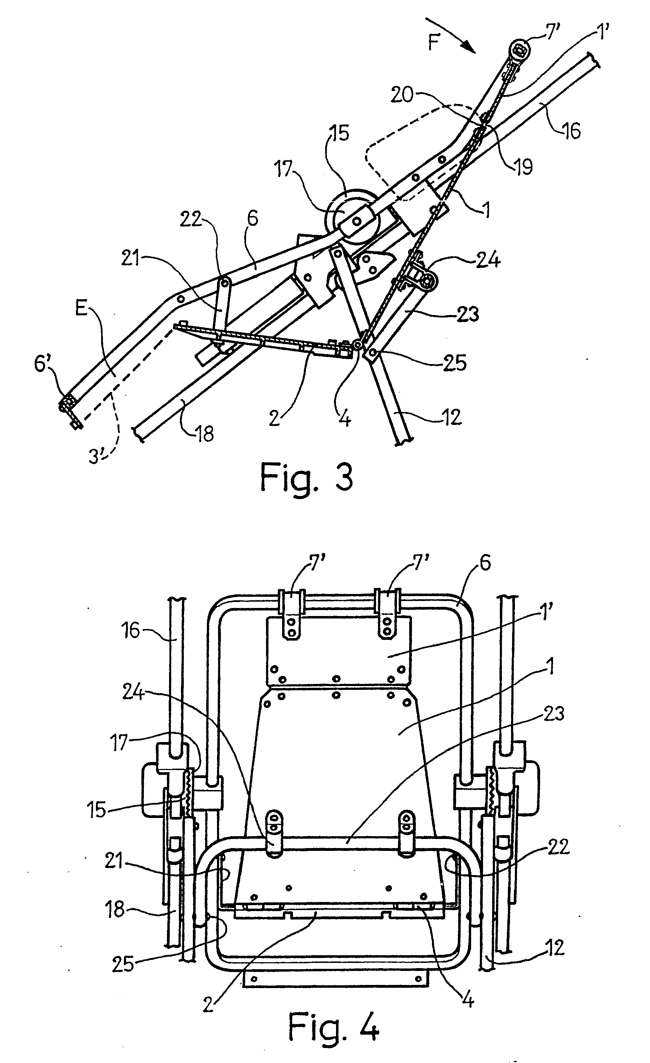

As shown in figures 3 to 6, the board-like member forming the seat 2 as such is suspended pivotably by tie bars 21 from points 22 on the side members of the frame 6 and the board-like member forming the backrest 1 also bears, pivotably, on an inverted U-shaped rear support 23 journalled in clamps 24 on the rear face of the backrest and which is pivotably connected in turn to points 25 on the sides of the rear legs 12 forming part of the pushchair chassis.

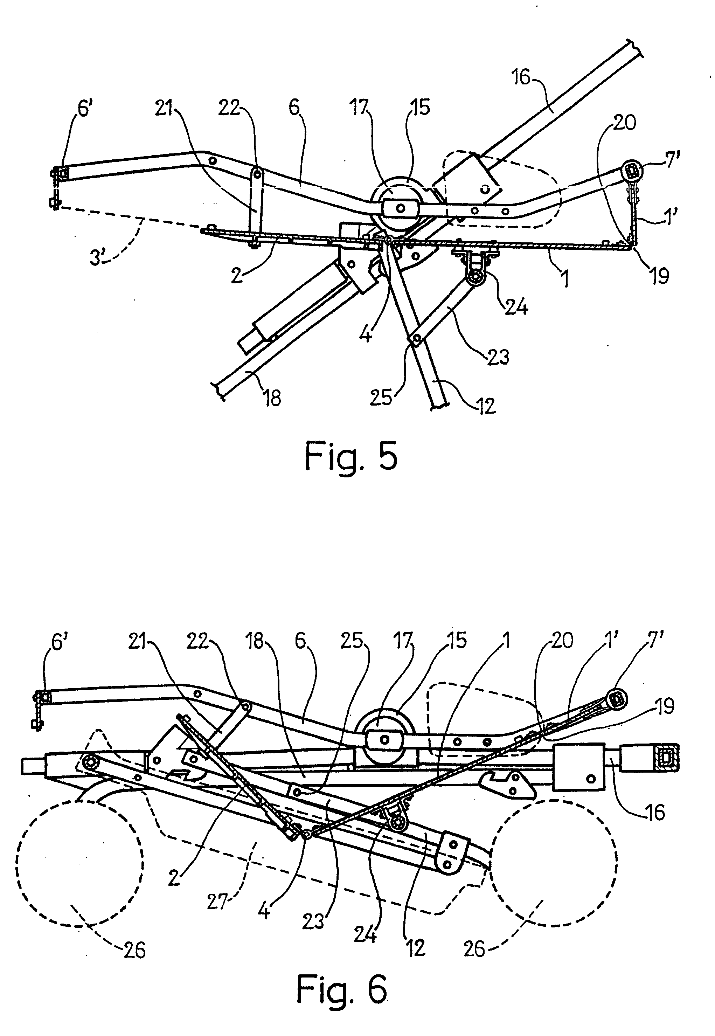

The upper edge of the headrest member 1' of the backrest is pivotably attached to the rear portion of the frame 6 by two clamps 7' in such a way that when said frame is pushed in the direction of the arrow F, the backrest 1, hanging at the end thereof from the frame 6 and supported in the intermediate portion thereof on the rear support 23, takes up a generally horizontal position coplanar with the seat 2, the latter being suspended from the frame 6 at the front end thereof by the tie bars 21, in a plane below the one formed by the frame 6 (figure 5), in which position the backrest, as a result of bearing against the support 23, is compressed, thereby being forced to fold along the divided area 19 and take up an angular position with the headrest portion 1' suspended from the frame 6.

Thereby a comfortable lying down position is attained for the baby when sleeping, without any risk of the baby sliding towards the rear whenever the front end of the pushchair is raised.

Between the seat board-like member 2 and the front portion 6' of the frame, there is a space E for the child's legs, which will rest on the area 3' corresponding to the upholstery member (not shown) removably covering the seat and frame assembly.

The side supports 15 attached to the limbs of the handlebar 16 of the pushchair comprise a device 17 for locking the frame 6 in different inclined positions. 26 indicates the wheels of the pushchair and 27 a large tray-basket which may be coupled thereto.

It may be seen in figure 6 that this new seat helps to make a compact unit when the pushchair is folded.

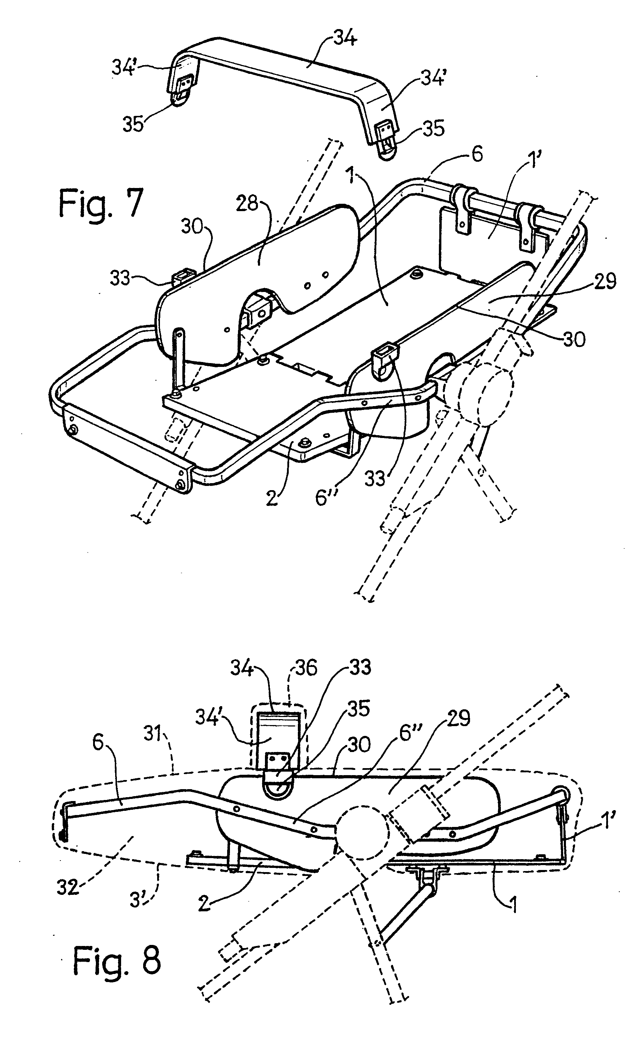

The seat of the invention is also characterised in that the intermediate portions of the side members of the frame 6 are provided with downwardly inclined portions 6" (figure 7) to which there are attached respective vertical board-like members 28 and 29 occupying said areas. The upper edge 30 of said board-like members helps provide along the whole of the upper edge of the 31 of the sheath 32 fitted over the frame and seat (figure 8) a generally straightline uniformity separating it suitably from the bottom formed by the backrest 1 and seat 2.

Attached to the upper front edge of the two board-like members 28 and 29 there are respective supports 33 forming a through box for mounting the ends 34' of a U-shaped crossrail 34 having short, slightly divergent arms, the ends of which are provided with respective removable attachment members 35 forming a resilient tooth which engages the said supports 33. The crossrail is formed by a flatbar provided with a soft sheath 36.

As may be seen in figure 8, in the lying down or horizontal position of the seat, the latter forms a regular longitudinal cavity providing comfort and protection for the child.

The invention, within its essence, may be reduced to practice in other embodiments differing only in detail from the one described herein only as an example, and which fall under the scope of the protection being claimed. Thus, the inventive seat for children's push chairs may be made with the most appropriate means and materials and with the most desirable accessories and the components may be replaced by other technically equivalent ones, since all is comprised within the spirit of the claims.

## Claims

1.- A seat for children's pushchairs, of the type coupled to a rocking frame and which is formed by a backrest, seat and, optionally, a footrest assembly, mutually pivotably connected together, characterised in that the backrest (1) is provided at the upper end thereof with a transverse division (19) forming two pivotably connected parts (1, 1') such that when the frame (6) moves from the inclined position to the lying down position thereof, and when the seat (2) as such rises towards the frame, the backrest undergoes a longitudinal compression whereby it is obliged to fold along the divided area (19) adopting an angular position with the end portion (1') suspended from the frame (6) and holding the remaining portion of the backrest (1) in a lower position than the frame.

2.- A seat for children's pushchairs, according to claim 1, characterised in that the board-like member forming the seat (2) as such is suspended pivotably by tie bars (21) in points (22) of the side members of the frame (6), while the board-like member forming the backrest (1) bears, also pivotably, against a rear support (23) pivotably connected in turn to points (25) on the side members of the pushchair chassis.

3.- A seat for children's pushchairs, according to claim 2, characterised in that the backrest (1), pivotably connected to the seat (2) and divided transversely (19) into two pivotably connected parts (1, 1'), is pivotably connected at the upper end (7') thereof to the rear portion of the frame (6), such that, when the frame is placed in the horizontal position, the backrest, hanging from the frame by the rear end thereof and bearing at the mid-point thereof on the rear support (23), adopts a generally hori zontal position coplanar with the seat (2), the latter suspended from the frame at the front end thereof, in a plane below the one forming the frame (6).

4.- A seat for children's pushchairs, according to claim 2, characterised in that between the seat boardlike member(2) and the front portion (6') of the frame there is a space (E) for the child's legs which rest on the corresponding portion (3') of the removable upholstery member (31) covering the seat assembly.

5.- A seat for children's pushchairs, according to claim 2, characterised in that at intermediate positions of the side members of the frame (6), downwardly inclined (6"), there are attached respective vertical board-like members (28, 29) occupying said areas, the upper edge of which board-like members helps to provide the whole of the upper edge of the sheath (31) to be placed over the frame and seat, a generally straight line suitably separating it from the bottom formed by the seat (2) and the backrest (1) thereof.

6.- A seat for children's pushchairs, according to claim 5, characterised in that the two board-like members (28, 29) attached to the frame (6) are provided adjacent the front upper edge thereof with respective supports (33) for receiving and coupling the ends (34') of a U-shaped crossrail (34), the ends of which are provided with respective removable attachment members (35) mating with the said supports (33).

Fig. 1

Fig. 2

Fig. 3

Fig. 4

Fig. 5

Fig. 6

Fig. 7

Fig. 8